(19) Europäisches Patentamt
European Patent Office
Office européen des brevets

(11) **EP 2 993 625 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
**G06K 19/07** (2006.01)     **G06F 11/24** (2006.01)

(21) Anmeldenummer: **15002613.6**

(22) Anmeldetag: **07.09.2015**

(54) **VERFAHREN ZUM BETRIEB EINES KONTAKTLOSEN DATENTRÄGERS**

METHOD FOR OPERATING A CONTACTLESS DATA CARRIER

PROCEDE DE FONCTIONNEMENT D'UN SUPPORT DE DONNEES SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2014 DE 102014013318**

(43) Veröffentlichungstag der Anmeldung:
**09.03.2016 Patentblatt 2016/10**

(73) Patentinhaber: **Giesecke+Devrient Mobile Security GmbH**
**81677 München (DE)**

(72) Erfinder:
• **Baldischweiler, Michael**
**81825 München (DE)**
• **Menacher, Rainer**
**81825 München (DE)**

(56) Entgegenhaltungen:
**DE-A1- 10 334 398    DE-A1-102013 002 888**

**Beschreibung**

Die vorliegende Erfindung betrifft ein Verfahren in einem kontaktlosen Datenträger, wobei eine interne Taktfrequenz, welche von einer Feldstärke eines elektromagnetischen Feldes abhängt, eingestellt wird. Weiterhin empfängt der kontaktlose Datenträger eine Abfrage und erstellt auf die Abfrage eine Antwort.

DE 10 2013 002888 A1 zeigt ein Verfahren zur Bestimmung der Belastbarkeit einer elektrischen Quelle durch einen Prozessor, so dass ein Start und/oder eine Ausführung durch den Prozessor ausgeführt werden, ohne dass der Start und/oder die Ausführung des Programms unterbrochen werden, wenn der Prozessor während dem Start und/oder während der Ausführung des Programms der Quelle mehr elektrische Energie entnimmt als die Quelle zur Verfügung stellt.

DE 103 34 398 A1 zeigt ein Verfahren zur Reduktion des Stromverbrauchs eines mobilen Datenspeichers zur kontaktlosen Datenübertragung mit einem Schreib-/ Lesegerät, welcher zumindest einen Energiespeicher und Verbraucher enthält.

Zur Kommunikation zwischen einem kontaktlosen Datenträger und einem Kartenleser wird üblicherweise der kontaktlose Datenträger in ein elektromagnetisches Feld des Kartenlesers gebracht. Zum Betrieb eines Chips auf dem kontaktlosen Datenträger entnimmt dieser aus dem elektromagnetischen Feld Energie. Die dem kontaktlosen Datenträger zur Verfügung stehende Energie ist durch eine Feldstärke festgelegt, welche der kontaktlose Datenträger durch seine Position im elektromagnetischen Feld erfährt. Beim Einbringen des kontaktlosen Datenträgers in das elektromagnetische Feld wird ab einer ausreichenden Feldstärke der kontaktlose Datenträger, insbesondere der Chip, gestartet. Die Spannungsversorgung des Chips wird entsprechend der vorhandenen Feldstärke abgestimmt.

Die Leistungsfähigkeit des kontaktlosen Datenträgers bestimmt sich unter anderem durch die Taktfrequenz des Chips. Es sind kontaktlose Datenträger verfügbar, deren Taktfrequenz über ein Signal im elektromagnetischen Feld dem kontaktlosen Datenträger vorgegeben oder zumindest beeinflusst wird. Zum Einstellen der Taktfrequenz des kontaktlosen Datenträgers ist ein Taktvervielfacher oder ein Teiler auf dem kontaktlosen Datenträger möglich. Je nach Anwendung des kontaktlosen Datenträgers und/ oder des Chips kann so eine bestimmte Taktfrequenz eingestellt werden. Eine Erhöhung der Taktfrequenz bedingt jedoch einen höheren Stromverbrauch. Der Stromverbrauch könnte aber nicht durch die aus dem elektromagnetischen Feld verfügbare Leistung gedeckt sein. Dies führt zu einem Abbruch des kontaktlosen Datenträgers. Weiterhin führt eine stetige Anpassung der Taktfrequenz zu Leistungsschwankungen, insbesondere Schwankungen der Verarbeitungsgeschwindigkeit, in dem kontaktlosen Datenträger. Als Folge können Fehler bei der Abarbeitung von Abfragen sowie Abbrüche des kontaktlosen Datenträgers vorkommen. Darüber hinaus sind Schaltungen zur stetigen Anpassung der Taktfrequenz aufwändig, komplex und störempfindlich.

Aus der WO 2005/062 243 A1 ein kontaktloser Datenträger mit internen Taktgenerator bekannt. Der interne Taktgenerator generiert die Taktfrequenz des kontaktlosen Datenträgers. Die Taktfrequenz kann während des Betriebs zufällig variieren. Angriffe zur Analyse des Taktverhaltens während der Befehlsverarbeitung in dem kontaktlosen Datenträger können verhindert werden.

Bei vielen kontaktlosen Datenträgern wird eine Basis-Taktfrequenz als auch die interne Spannungsversorgung während des Einbringens des kontaktlosen Datenträgers in das elektromagnetische Feld und während des Startens des kontaktlosen Datenträgers entsprechend der vorhandenen Feldstärke abgestimmt. Die Basis-Taktfrequenz legt allein oder zusammen mit einem Taktvervielfacher die Taktfrequenz des kontaktlosen Datenträgers fest. Der kontaktlose Datenträger legt zu einem bestimmten Zeitpunkt, nachdem er in das elektromagnetische Feld eingebracht ist, die interne Taktfrequenz basierend auf der Feldstärke fest. Die Feldstärke sinkt im Quadrat des Abstands zum Lesegerät. Befindet sich der kontaktlose Datenträger nahe dem Lesegerät ist die Feldstärke größer als bei größerem Abstand. Wird der kontaktlose Datenträger langsam in das elektromagnetische Feld eingebracht, befindet sich der kontaktlose Datenträger in der Regel zu einem bestimmten Zeitpunkt, bspw. des Festlegens der Taktfrequenz, weiter vom Lesegerät weg als wenn der kontaktlose Datenträger schnell in das elektromagnetische eingebracht wäre. Dem kontaktlosen Datenträger steht eine geringe Feldstärke und somit eine geringere Feldenergie zur Verfügung. Als Folge legt der kontaktlose Datenträger für seinen Betrieb eine geringe Taktfrequenz fest. Eine Nachregelung der internen Spannungsversorgung ist üblicherweise nicht vorgesehen. Eine Erhöhung der Taktfrequenz bedingt, wie bereits beschrieben, eine Erhöhung des Stromverbrauchs. Ein zumindest teilweiser Ausfall und/ oder eine Zerstörung des kontaktlosen Datenträgers könnten folgen. Es ist deshalb eine Aufgabe der Erfindung, ein Verfahren und einen kontaktlosen Datenträger aufzuzeigen, womit die Probleme des Standes der Technik gelöst werden. Insbesondere ist es Aufgabe der Erfindung, die Leistungsfähigkeit des kontaktlosen Datenträgers zu optimieren.

Zur Lösung der Aufgabe werden erfindungsgemäß ein Verfahren und ein kontaktloser Datenträger gemäß den unabhängigen Ansprüchen vorgeschlagen. Besonders vorteilhafte Ausgestaltungen sind in den Unteransprüchen enthalten.

In einem Verfahren gemäß der Erfindung führt der kontaktlose Datenträger ein erstes Einstellen einer internen Taktfrequenz durch, welche von einer Feldstärke eines elektromagnetischen Feldes abhängt. Erfindungsgemäß führt der kontaktlose Datenträger einen Neustart und ein zweites Einstellen der internen Taktfrequenz aus. Der kontaktlose Datenträger empfängt nach dem zweiten Einstellen der internen Taktfrequenz eine Abfrage und erstellt auf die Abfrage eine Antwort.

Aufgrund des Neustarts und dem nachfolgenden zweiten Einstellen der internen Taktfrequenz wird ein Einstellen der Leistungsfähigkeit des kontaktlosen Datenträgers verzögert. Der kontaktlose Datenträger befindet sich näher am Lesegerät und somit weiter in dem elektromagnetischen Feld. Dem kontaktlosen Datenträger steht bei dem zweiten Einstellen der internen Taktfrequenz eine im Vergleich zum ersten Einstellen der Taktfrequenz höhere Feldstärke zur Verfügung. Der kontaktlose Datenträger stellt dann eine höhere Taktfrequenz ein. Der kontaktlose Datenträger wird bei einer nachfolgenden Kommunikation mit dem Lesegerät mit höherer Leistungsfähigkeit arbeiten. Insbesondere ist die Abarbeitung von Abfragen und/ oder Befehlen durch den kontaktlosen Datenträger schneller.

Im Vergleich zum Stand der Technik ist mit der vorliegenden Erfindung eine höhere und optimierte Leistungsfähigkeit des kontaktlosen Datenträgers ohne zusätzlichen, komplexen Regel- und Steueraufwand möglich. Zudem ist ein Aufrechterhalten des Betriebs des kontaktlosen Datenträgers gewährleistet.

Der kontaktlose Datenträger umfasst vorzugsweise ein Sicherheitselement und kann gegebenenfalls auch als solches verstanden werden. Der kontaktlose Datenträger stellt mittels kontaktloser Verbindung, beispielsweise Funksignale, eine Datenübertragung zu einem Kommunikationspartner, nämlich dem Lesegerät, her. Zur Funkübertragung kommen insbesondere NFC (Near Field Communication, Nahfeldkommunikation) oder RFID (Radio Frequency Identification) in Betracht. Der kontaktlose Datenträger kann als NFC-Einheit verkörpert sein. Der kontaktlose Datenträger kann als separates Bauteil bereitgestellt sein. Hierzu kommen insbesondere genormte Bauformen wie beispielsweise ID-0 oder ID-1 sowie freie Formen in Betracht. Der kontaktlose Datenträger kann als tragbarer Datenträger, wie eine Kontaktloskarte, insbesondere eine Chipkarte, eine sichere Massenspeicherkarte oder ein USB-Token, verkörpert sein. Beispielsweise kann der kontaktlose Datenträger eine Identitätskarte und/ oder eine Fahrkarte sein. Der kontaktlose Datenträger kann auch als eingebettetes Modul in einem Endgerät, beispielsweise als Trusted Platform Modul (TPM), M2M-Modul, Benutzeridentifikationsmodul oder als Decodermodul vorliegen. Vorzugsweise weist der kontaktlose Datenträger einen Prozessor auf, auf dem ein Betriebssystem läuft oder lauffähig ist. Der kontaktlose Datenträger kann die Form eines Etiketts aufweisen. Der kontaktlose Datenträger kann zur Integration in einem Endgerät, beispielsweise in einem Notebook, einem Handy, einem Computer oder einer Tastatur vorgesehen sein. Der kontaktlose Datenträger kann das Sicherheitselement sein. Weiterhin kann der kontaktlose Datenträger eine CLF-Einheit (Contactless-Frontend-Einheit) oder eine CLF-Schnittstelle (Contactless-Frontend-Schnittstelle) sein. Auch wenn im Rahmen dieser Patentanmeldung mehrmals eine Kontaktloskarte beschrieben ist, ist der Begriff Kontaktloskarte nur beispielhaft und repräsentativ für einen kontaktlosen Datenträger zu lesen. Grundsätzlich sollte im Rahmen dieser Patentanmeldung zum Begriff "Kontaktloskarte" jede mögliche Ausführung eines kontaktlosen Datenträgers mitgelesen werden.

Das Lesegerät kann als mobile Einheit, beispielsweise an einem Kassensystem, als Installationsgerät, insbesondere zur Zugangskontrolle, oder als integriertes System, beispielsweise in einem Notebook, einem Handy, einem Computer oder einer Tastatur, vorgehalten sein.

In einer Ausführungsform kann vorgesehen sein, dass dem kontaktlosen Datenträger während des ersten Einstellens der internen Taktfrequenz bis zum zweiten Einstellen der internen Taktfrequenz dauerhaft eine Mindestfeldstärke, welche eine ausreichende Feldstärke zur Abarbeitung von Befehlen und Prozessen ist, zur Verfügung steht. Eine Unterbrechung der Energieversorgung des kontaktlosen Datenträgers aufgrund unzureichender Energie aus dem elektromagnetischen Feld des Lesegeräts findet nicht statt.

Das erfindungsgemäße Verfahren wird unterbrechungsfrei durchgeführt. Insbesondere, wenn das zweite Einstellen der internen Taktfrequenz in Abhängigkeit der internen Taktfrequenz aus dem ersten Einstellen erfolgt, ist ein unterbrechungsfreies Verfahren vorteilhaft. Die zur Verfügung stehende Energie muss nicht zwingend den Betrag, der zum Schreiben von Informationen auf den kontaktlosen Datenträger notwendig ist, erreichen.

In einer Ausführungsform umfasst der kontaktlose Datenträger eine Prozessoreinheit und ein Betriebssystem. Das Betriebssystem läuft auf der Prozessoreinheit und veranlasst das Neustarten des kontaktlosen Datenträgers. D. h., hinsichtlich einer Startsequenz des kontaktlosen Datenträgers, wobei die Startsequenz alle Schritte zur initialen Vorbereitung des kontaktlosen Datenträgers auf die Kommunikation mit dem Lesegerät umfasst (Initialvorgänge), initiiert das Betriebssystem einen Neustart. Der Neustart kann nur die Prozessoreinheit betreffen, um die Startsequenz erneut auszuführen. Zum Neustart muss die Startsequenz nicht vollständig abgeschlossen sein. Vielmehr wäre es denkbar, dass die bereits begonnene Startsequenz in ihrem Ablauf abgebrochen und der Neustart ausgeführt wird. Der Ablauf der Startsequenz kann durch das Betriebssystem gesteuert sein. Das Betriebssystem startet mit Programmcodes, womit unter anderem die Funktionstüchtigkeit des kontaktlosen Datenträgers geprüft wird. Beispielsweise werden während der Startsequenz die verfügbare Feldstärke erfasst, entsprechend die interne Taktfrequenz eingestellt und Übertragungsparameter eingestellt.

Bei dem Neustart handelt es sich um einen Reset (Rücksetzvorgang) des kontaktlosen Datenträgers. Dabei wird zumindest ein Teil des kontaktlosen Datenträgers in einen definierten Ausgangszustand gebracht. Grundsätzlich wird durch den Neustart der kontaktlose Datenträger nicht unbedingt in einen Auslieferzustand gesetzt. Vielmehr kann erwünscht sein, dass bestimmte Zustände, beispielsweise Speicherinhalte, erhalten bleiben.

Vorzugsweise wird mit dem Neustart ein sogenannter Warmstart des kontaktlosen Datenträgers durchgeführt. Mit dem Warmstart führt das Betriebssystem und/ oder eine Applikation einen oder mehrere Initialvorgänge des kontaktlosen Datenträgers, beispielsweise das Einstellen der internen Taktfrequenz, erneut aus. Die Energieversorgung von Hardwarebauteilen bleibt in der Regel jedoch bestehen und erhalten. Bestimmte bereits gewonnene Betriebsparameter können erhalten bleiben, beispielsweise Inhalte in einem flüchtigen Speicher des kontaktlosen Datenträgers. Der kontaktlose Datenträger kann über einen bereits erfolgten Neustart eine Information im Speicher des kontaktlosen Datenträgers ablegen und den Schritt des Einstellens der internen Taktfrequenz als das zweite Einstellen der internen Taktfrequenz erkennen.

Der Neustart kann in einer Ausführungsform auch als Kaltstart des kontaktlosen Datenträgers ausgeführt werden. Bei einem Kaltstart werden Hardwareelemente des kontaktlosen Datenträgers in einen Ausgangszustand gebracht. Zum Beispiel wird die Energieversorgung der Hardwareelemente, beispielsweise bestimmte Speicherbereiche, Teile des Prozessors oder der Prozessor im Gesamten, zumindest kurzzeitig von der Energieversorgung getrennt. Die Trennung kann mittels Hardware oder Software erfolgen. Um das zweites Einstellen der internen Taktfrequenz zu gewährleisten, kann in einem nichtflüchtigen Speicher eine Information, beispielsweise ein Flag, welche das Durchführen des ersten Einstellens der internen Taktfrequenz anzeigt, gespeichert werden. Aufgrund der Information erkennt der kontaktlose Datenträger, ob bereits das erste Einstellen der internen Taktfrequenz erfolgt ist. Der nichtflüchtige Speicher ist nicht an die Energieversorgung des kontaktlosen Datenträgers gekoppelt. Der Speicherinhalt bleibt erhalten. Vorzugsweise wird der Speicherinhalt bzw. die Information gelöscht, wenn der kontaktlose Datenträger aus dem elektromagnetischen Feld gebracht oder in das elektromagnetische Feld gebracht wird.

Das Durchführen des Neustarts mittels des Betriebssystems und/ oder der Applikation ermöglicht ein einfaches Implementieren des erfindungsgemäßen Verfahrens in dem kontaktlosen Datenträger. Zusätzliche Anforderungen an Hardware des kontaktlosen Datenträgers sind grundsätzlich nicht nötig. Das erfindungsgemäße Verfahren kann bei nahezu allen kontaktlosen Datenträgern eingesetzt werden.

In einer Ausführungsform umfasst der kontaktlose Datenträger einen Taktgenerator. Der Taktgenerator legt unter anderem die Taktfrequenz des kontaktlosen Datenträgers fest. Vorzugsweise wird beim Neustarten des kontaktlosen Datenträgers der Taktgenerator zumindest kurzzeitig deaktiviert. Das Deaktivieren verursacht einen Neustart des Prozessors und gegebenenfalls des Betriebssystems. Ein erneutes (zweites) Einstellen der internen Taktfrequenz wird durchgeführt.

In einer Ausführungsform kann vorgesehen sein, dass der Schritt des Neustartens des kontaktlosen Datenträgers und/ oder des zweiten Einstellens der internen Taktfrequenz wiederholt ausgeführt werden. Das Neustarten und zweite Einstellen der internen Taktfrequenz können als Schleife mehrmals durchgeführt werden. Es wird unterstellt, dass beim Einbringen des kontaktlosen Datenträgers in das elektromagnetische Feld der kontaktlose Datenträger weiter in das elektromagnetische Feld bewegt wird. Mit jeder Wiederholung wird das Zeitintervall zwischen dem Einbringen des kontaktlosen Datenträgers in das elektromagnetische Feld und dem letztmaligen zweiten Einstellen der internen Taktfrequenz größer, wobei gleichzeitig die Feldstärke steigt. Das Zeitintervall und die Anzahl der Wiederholungen sind vorzugsweise so zu wählen, dass der kontaktlose Datenträger so weit in das elektromagnetische Feld eingebracht ist, um eine größtmögliche Leistungsfähigkeit, d. h. eine größtmögliche Taktfrequenz, einzustellen. Vorzugsweise ist eine Leistungseffizienz durch den kontaktlosen Datenträger zu ermitteln. Die Leistungseffizienz berücksichtigt den Zeitverzug zwischen dem Zeitpunkt einer ersten möglichen Kommunikation mit erster Taktfrequenz aus dem ersten Einstellen und dem realen Zeitpunkt für eine Kommunikation mit optimierter Leistungsfähigkeit durch höhere Taktfrequenz.

Der kontaktlose Datenträger kann einen Schritt zum Berechnen der Anzahl der Wiederholungen durchführen. Der Schritt zum Berechnen wird vorzugsweise vor dem zweiten Einstellen der internen Taktfrequenz durchgeführt. Zum Berechnen der Anzahl an Wiederholungen kann der kontaktlose Datenträger die Taktfrequenz aus dem ersten und/ oder zweiten Einstellen der internen Taktfrequenz berücksichtigen. Weiterhin könnte der kontaktlose Datenträger zur Berechnung der Anzahl an Wiederholungen die dem kontaktlosen Datenträger zur Verfügung stehende Feldstärke und/ oder Betriebsspannung der Spannungsversorgung bestimmen und/ oder verwenden. Zur Berechnung könnte der kontaktlose Datenträger einen Zeitwert, beispielsweise zwischen zwei Neustarts und/ oder dem ersten, zweiten und/ oder wiederholten zweiten Einstellen der Taktfrequenz berücksichtigen. Weiterhin könnte der kontaktlose Datenträger eine Änderung der zur Verfügung stehenden Feldstärke vorausberechnen, insbesondere hinsichtlich der Leistungseffizienz. Die Berechnung der Anzahl an Wiederholungen kann einmalig durchgeführt werden. Alternativ ist eine Berechnung zu bzw. vor jeder Wiederholung möglich. Eine optimale Einstellung der Leistungsfähigkeit, insbesondere der Taktfrequenz, des kontaktlosen Datenträgers ist somit möglich.

Die Bestimmung der dem kontaktlosen Datenträger zur Verfügung stehenden Feldstärke aus dem elektromagnetischen Feld erfolgt vorzugsweise vor dem Schritt des ersten und/ oder zweiten Einstellens der internen Taktfrequenz. Vorteilhaft wird die zur Verfügung stehende Feldstärke wenigstens zu jedem Einstellen der internen Taktfrequenz bestimmt. Der kontaktlose Datenträger kann wenigstens zweimal die verfügbare Feldstärke ermitteln. Aus den wenigstens zwei ermittelten Feldstärken bestimmt der kontaktlose Datenträger eine positive oder negative Änderung, wobei eine positive Änderung einem Annähern des kontaktlosen Datenträgers an das Lesegerät und eine negative Änderung einem Entfernen des kontaktlosen Datenträgers von dem Lesegerät entspricht. Aus der Änderung und dem Betrag der Feldstärke kann der kontaktlose Datenträger berechnen, ob ein wiederholter Neustart die Leistungsfähigkeit und Leistungseffizienz steigern würde. Sollte sich eine negative Änderung ergeben, kann bestimmt werden, ob die zukünftig zur Verfügung stehende Feldstärke für eine Kommunikation und Transaktion mit dem Lesegerät ausreichen würde. Sollte der kontaktlose Datenträger zu dem Ergebnis kommen, dass die zukünftig zur Verfügung stehende Energie nicht zu einer signifikanten Steigerung der Leistungseffizienz ausreicht, führt der kontaktlose Datenträger keinen weiteren Neustart durch.

Der kontaktlose Datenträger kann einen Zähler verwenden. Der Zähler gibt die bereits erfolgten Neustarts oder die noch ausbleibenden Neustarts wieder. Der kontaktlose Datenträger ermittelt vor jedem Neustart mithilfe des Zählers, ob ein erneuter Neustart und erneutes zweites Einstellen der internen Taktfrequenz erfolgen soll oder ob eine ausreichende Anzahl an Neustarts erreicht ist. Der Zähler kann auf den kontaktlosen Datenträger, insbesondere im Betriebssystem des kontaktlosen Datenträgers, implementiert sein. Der Zähler kann eine Information in einem Speicher des kontaktlosen Datenträgers sein. Vorzugsweise handelt es sich um einen globalen Zähler. Dies bedeutet, dass der Zähler durch den Neustart des kontaktlosen Datenträgers nicht zurückgesetzt wird. Insbesondere wird die Spannungsversorgung des Zählers während des erfindungsgemäßen Verfahrens, unabhängig vom Schritt des Neustartens, aufrechterhalten. Weiterhin kann der Zähler auf einer im Bezug zum kontaktlosen Datenträger externen Einheit, beispielsweise ein mobiles Endgerät wie z. B. ein Mobiltelefon, sein, wobei der kontaktlose Datenträger den Zähler abfragt. Der Zähler kann aktiv Neustarts des kontaktlosen Datenträgers erfassen. Alternativ kann der Zähler als passives Element, beispielsweise als Wert in einem Speicher, ausgeführt sein.

Die Abfrage kann eine Identifikationsabfrage (REQA), ein Aufwachbefehl (WUPA), eine Antikollisionsabfrage (ANTICOL) und/ oder ein Selektierungsbefehl (SELECT) vom Lesegerät sein. Für diese Abfragen sind Kommunikationszeiten festgelegt. Somit kann aus den Empfangszeiten der jeweiligen Abfragen ein Startzeitpunkt für einen Zeitgeber gebildet werden. In Verbindung mit den ermittelten Feldstärken lässt sich eine Einbringgeschwindigkeit des kontaktlosen Datenträgers basierend auf einer Änderung der Feldstärke im Bezug zu einem Zeitintervall, z. B. der Kommunikationszeiten, ermitteln. Weiterhin lässt sich ein Bewegungsprofil des kontaktlosen Datenträgers im elektromagnetischen Feld erstellen. Der kontaktlose Datenträger könnte eine Position im elektromagnetischen Feld ermitteln. Aus den ermittelten Werten bestimmt der kontaktlose Datenträger die Anzahl der Schritte des Neustarts und des zweiten Einstellens der internen Taktfrequenz.

Ein kontaktloser Datenträger gemäß der Erfindung ist zur Durchführung eines oben beschriebenen Verfahrens ausgebildet. Insbesondere können ein Betriebssystem und/ oder eine Applikation des kontaktlosen Datenträgers zum Ausführen des Verfahrens ausgebildet sein.

Weiterhin kann erfindungsgemäß vorgesehen sein, dass ein Computerprogrammprodukt zur Ausführung des oben beschriebenen Verfahrens ausgebildet ist.

Die Erfindung wird im Folgenden noch weiter beispielhaft an Hand der Zeichnungen erläutert. Es zeigen:

Fig. 1    ein Ablaufdiagramm einer Ausführungsform der Erfindung; und

Fig. 2    eine Darstellung der Bewegung einer Kontaktloskarte in einem Les$er-feld.

Nachfolgend wird in den Figuren beispielhaft eine Kontaktloskarte als kontaktloser Datenträger beschrieben. Selbstverständlich kann es sich im Rahmen dieser Erfindung auch um eine andere Ausführungsform eines kontaktlosen Datenträgers handeln.

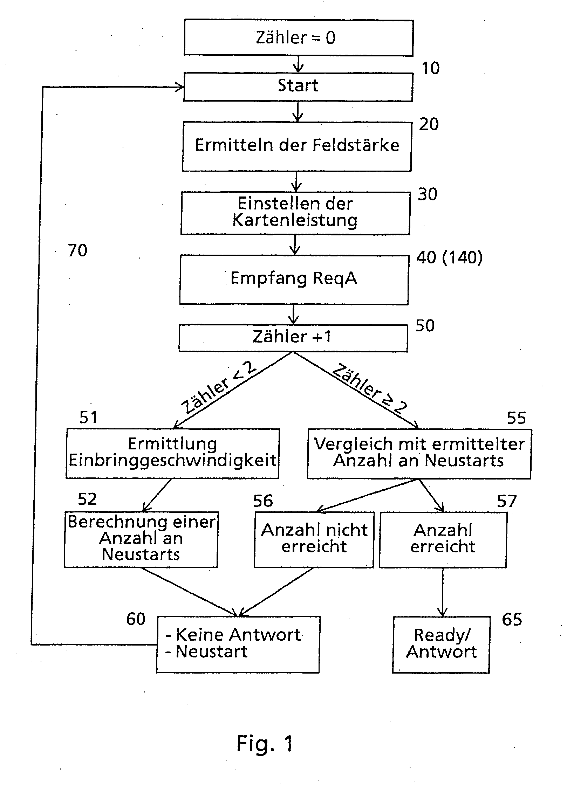

Fig. 1 zeigt ein schematisches Ablaufdiagramm einer Ausführungsform gemäß der Erfindung. Dargestellt ist in Fig. 1 ein Teil des Betriebsablaufs einer Kontaktloskarte in einem elektromagnetischen Feld eines Lesegeräts.

Im Folgenden wird als kontaktloser Datenträger beispielhaft eine Kontaktloskarte 1 zugrunde gelegt. Anstelle oder zusätzlich zu einer Kontaktloskarte kann aber auch jeder kontaktlose Datenträger Anwendung finden. Die Kontaktloskarte 1 kann anders gestaltet, etwa ein Sicherheitsmodul, insbesondere ein tragbarer Datenträger, z. B. eine Chipkarte, eine sichere Massenspeicherkarte oder ein USB-Token, sein. Beispielsweise kann die Kontaktloskarte eine Identitätskarte, eine Eintrittskarte und/ oder eine Fahrkarte sein. Die Kontaktloskarte kann auch als eingebettetes Modul in einem Endgerät, beispielsweise als Trusted Platform Modul (TPM), M2M-Modul, Benutzeridentifikationsmodul oder als Decodermodul vorliegen.

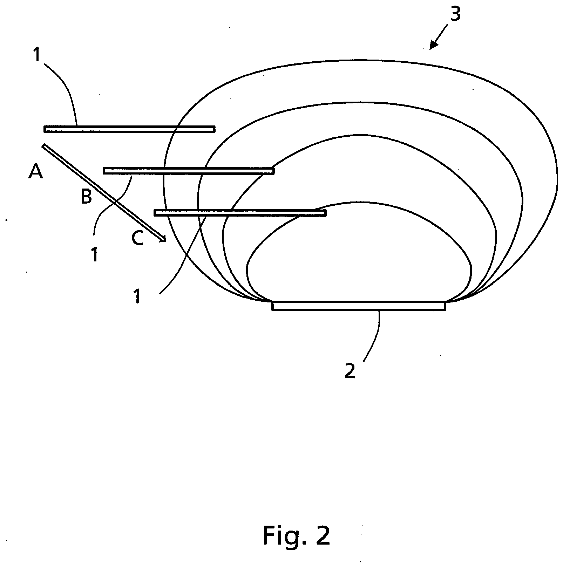

Nachfolgend wird das Ablaufdiagramm aus Fig. 1 zusammen mit Fig. 2 beschrieben. Eine Kontaktloskarte 1 wird, in der Regel durch einen Nutzer, einem Lesegerät 2 zugeführt (Pfeil Fig. 2). Exemplarisch sind in Fig. 2 drei Positionen A, B und C der Kontaktloskarte 1 dargestellt. In der ersten Position A ist die Kontaktloskarte 1 in das elektromagnetische Feld 3 des Lesegeräts 2 eingedrungen. Die Kontaktloskarte 1 generiert an dieser Stelle im Start-Schritt 10 aus dem elektromagnetischen Feld 3 ausreichend Energie, um Abfragen des Lesegeräts 2 zu bearbeiten. Die Kontaktloskarte 1 startet dadurch mit ihrem Betriebsablauf. Sie beginnt mit einer Startsequenz, in der sie Initialvorgänge startet. Dabei ermittelt die Kontaktloskarte 1 zunächst im Schritt 20 die zur Verfügung stehende Feldstärke aus dem elektromagnetischen Feld 3. Mithilfe beispielsweise eines Leistungsmanagements in einem Prozessor der Kontaktloskarte 1 wird daraufhin im Schritt 30 die Leistung der Kontaktloskarte 1 eingestellt. Insbesondere umfasst der Schritt 30 ein erstes Einstellen einer internen Taktfrequenz. Diese interne Taktfrequenz ist von der Feldstärke des elektromagnetischen Feldes 3 abhängig. Die Kontaktloskarte 1 kann eine Regelung umfassen, womit basierend auf die ermittelte Feldstärke über einen Oszillator bzw. Taktgenerator die Taktfrequenz des kontaktlosen Datenträgers erzeugt wird.

Nachdem die Taktfrequenz der Kontaktloskarte 1 eingestellt und ein Betriebssystem der Kontaktloskarte 1 gestartet ist, empfängt im Schritt 40 die Kontaktloskarte 1 eine erste Abfrage, z. B. ReqA, vom Lesegerät 2. Ein Zähler auf der Kontaktloskarte 1 ist zu diesem Zeitpunkt mit dem Wert 0 belegt. Zum Schritt 50 wird der Wert des Zählers um Eins erhöht. Weiterhin prüft die Kontaktloskarte 1 den Wert des Zählers.

Ist der Betrag des Zählers kleiner als Zwei, wird eine Einbringgeschwindigkeit der Kontaktloskarte 1 in das elektromagnetische Feld 3 ermittelt (Schritt 51). Dazu bestimmt die Kontaktloskarte 1 zum Zeitpunkt t1 erneut die Feldstärke. Da sich die Kontaktloskarte 1 in das elektromagnetischen Feld 3 bewegt, ist eine Veränderung der erneut bestimmten Feldstärke (E1) zu der im Schritt 20 und Zeitpunkt t0 ermittelten Feldstärke (E0) auf die Zeitdifferenz (t1-t0) zu erwarten

$$\text{Einbringgeschwindigkeit} = (E1\text{-}E0)/(t1\text{-}t0).$$

Auf der Grundlage der ermittelten Einbringgeschwindigkeit berechnet im Schritt 52 die Kontaktloskarte 1 eine Anzahl an Neustarts der Kontaktloskarte 1. In diesem Ausführungsbeispiel beträgt die Anzahl der berechneten Neustarts Drei. Im Schritt 60 führt die Kontaktloskarte 1 einen Neustart durch. Die Kontaktloskarte 1 versendet somit auf die im Schritt 40 empfangene Abfrage keine Antwort.

Über Schritt 70 beginnt die Kontaktloskarte 1 sodann erneut mit der Startsequenz. Im Zuge der Einbringbewegung der Kontaktloskarte 1 in das elektromagnetische Feld 3 gelangt sich die Kontaktloskarte 1 an die Position B (Fig. 2). Im Schritt 10 startet hier die Kontaktloskarte 1 erneut: Sie generiert im Schritt 10 erneut ausreichend Energie aus dem elektromagnetischen Feld 3 zur Verarbeitung von Befehlen und Abfragen. Damit startet sie erneut ihr Betriebssystem.

Zur Einstellung der Kartenleistung ermittelt die Kontaktloskarte 1 im nachfolgenden Schritt 20 wieder die ihr zur Verfügung stehende Feldstärke. Ausgehend von der ermittelten Feldstärke erfolgt im Schritt 30 ein zweites Einstellen der Kartenleistung der Kontaktloskarte 1, insbesondere der internen Taktfrequenz. Im Schritt 140 (ehemals und analog Schritt 40) empfängt die Kontaktloskarte 1 eine zweite Abfrage vom Lesegerät 2. Nachfolgend wird im Schritt 50 der Wert des Zählers um Eins erhöht. Es wird geprüft, ob der Wert des Zählers größer oder gleich Zwei ist. Vorliegend beträgt der Zähler Zwei. Folglich wird mit Schritt 55 fortgefahren. Der Zähler repräsentiert die Anzahl der bisher von der Kontaktloskarte 1 durchgeführten Startsequenzen, seit die Kontaktloskarte 1 in das elektromagnetische Feld 3 eingebracht worden ist. Im Schritt 55 wird der Wert des Zählers (Wert 2) mit der in Schritt 52 berechneter Anzahl an Neustarts (berechnete Anzahl = 3) verglichen. Die Kontaktloskarte kommt im Schritt 56 zu dem Ergebnis, dass die berechnete Anzahl an Neustarts noch nicht erreicht ist. Als Folge wird auf Schritt 60 verwiesen. Ein erneuter Neustart wird ausgeführt. Eine Antwort auf die empfangene Abfrage im Schritt 40 wird nicht erstellt und versandt.

Aufgrund des Neustarts beginnt die Kontaktloskarte 1 erneut über Schritt 70 mit der Startsequenz 10. Die Kontaktloskarte 1 befindet sich an der Position C. Die Schritte 20, 30, 40 bzw. 140 und 50 finden erneut statt. Im Schritt 50 wird der Zähler um Eins erhöht. Die Wertigkeit des Zählers beträgt somit Drei. Im Schritt 55 vergleicht die Kontaktloskarte 1 den Wert des Zählers mit der Anzahl der berechneten Neustarts aus Schritt 52. Im Schritt 57 ergibt der Vergleich, dass die berechnete Anzahl an Neustarts erreicht ist. Die Kontaktloskarte 1 wird somit im Schritt 65 in einen betriebsbereiten Zustand (ready) gesetzt und gibt eine Antwort auf die im letzten Schritt 140 empfangene Abfrage. Eine Kommunikation zwischen dem Lesegerät 2 und der Kontaktloskarte 1 findet statt.

Wie aus den Figuren 1 und 2 zu erkennen ist, wird die Leistung und/oder Taktfrequenz der Kontaktloskarte 1 jetzt erst an der Position C festgelegt. Die Kontaktloskarte 1 ist hier näher am Lesegerät 2 und dadurch einer höheren Feldstärke als in Position A ausgesetzt. Die Leistung und/ oder Taktfrequenz der Kontaktloskarte 1 wird an der Position C höher angesetzt als bei der Position A. Trotz der zeitlichen Verzögerung von zwei Neustarts trägt die mit der Erfindung erzielte hohe Taktfrequenz und hohe Kartenleistung zu einer verbesserten, insbesondere fehlerunanfälligen, Kommunikation und zu einer schnellen Verarbeitung von Abfragen und/ oder Befehlen bei. Darüber hinaus wird die zeitliche Verzögerung durch die höhere Taktfrequenz mehr als ausgeglichen.

In einer vereinfachten Ausführungsform kann die dargestellte Ermittlung der Einbringgeschwindigkeit im Schritt 51 und Berechnung einer Anzahl an Neustarts im Schritt 52 weggelassen werden. Lediglich wenigstens ein Neustart von der Kontaktloskarte 1 wäre vorgesehen. Auch bei dieser vereinfachten Ausführungsform wird für eine Transaktion zwischen Kontaktloskarte 1 und Lesegerät 2 die Taktfrequenz der Kontaktloskarte 1 erst zu einer späteren Einbringposition festgelegt. Der Kontaktloskarte 1 steht zum Einstellen der Kartenleistung im Schritt 30 der zweiten Startsequenz eine größere Feldstärke aus dem elektromagnetischen Feld 3 zur Verfügung.

Alternativ kann, wenn die Kontaktloskarte 1 im Schritt 56 ermittelt, dass die berechnete Anzahl an Neustarts noch nicht erreicht wurde, die Berechnung der Anzahl an Neustarts erneut durchgeführt werden. Dazu kann beispielsweise erneut die Einbringgeschwindigkeit im Schritt 51 ermittelt werden. Zur Ermittlung der Einbringgeschwindigkeit kann die Kontaktloskarte 1 die bereits ermittelten Feldstärken berücksichtigen. Als Zeitfaktor könnte der Abstand zwischen den empfangenen Abfragen (Schritt 40,140) verwendet werden.

Der Wert für die Prüfung des Zählers (im Beispiel Zwei) im Schritt 50 kann individuell festgelegt sein. Insbesondere wird der Wert durch den Herausgeber und/ oder den Hersteller der Kontaktloskarte 1 festgelegt. Der Wert im Schritt 50 gibt an, wie oft grundsätzlich Schritt 60 und somit ein Neustarten durchgeführt wird.

Die Berechnung einer Anzahl an Neustarts in Schritt 52 kann mithilfe einer Erfassung der Einbringgeschwindigkeit erfolgen. Grundsätzlich muss die Einbringgeschwindigkeit nicht ein Verhältnis von Strecke zu einer Zeit sein. Vielmehr kann die Einbringgeschwindigkeit eine zeitliche Änderung der Feldstärke in Bezug auf eine Zeit sein. Weiterhin kann die Anzahl an Neustarts von der Richtung und/ oder dem Wert einer Änderung der Feldstärke des elektromagnetischen Feldes und/oder von einer Bewegungsrichtung der Kontaktloskarte 1 abhängen. Die Kontaktloskarte 1 kann einen Gyrosensor, einen Neigungssensor und/ oder einen optischen Sensor zur Ermittlung der Umgebung und Bewegung umfassen. Bei der Ermittlung der Einbringgeschwindigkeit kann der zeitliche Abstand zwischen zwei Neustarts, zwischen zwei empfangene Abfragen und/ oder zwischen zwei festgelegten Ereignissen beitragen. Weiterhin kann ein Zeitmesser eingesetzt werden.

## Patentansprüche

1. Verfahren zum Aufbau einer Kommunikation zwischen einem Lesegerät und einem kontaktlosen Datenträger (1), umfassend die folgenden Schritte in dem kontaktlosen Datenträger (1):

   - Erstes Einstellen (30) einer internen Taktfrequenz, welche von der Feldstärke eines elektromagnetischen Feldes (3) abhängt;
   - Empfangen (140) einer Abfrage von einem Lesegerät; und
   - Erstellen (65) einer Antwort auf die Abfrage;

   **gekennzeichnet durch** die Schritte:

   - Neustarten (60) des kontaktlosen Datenträgers (1);
   - zweites Einstellen (30) der internen Taktfrequenz; wobei die Schritte des Empfangens (140) der Abfrage und des Erstellens (65) der Antwort auf die Abfrage nach dem zweiten Einstellen (30) der internen Taktfrequenz erfolgen.

2. Verfahren nach Anspruch 1, **dadurch gekennzeichnet, dass** die dem kontaktlosen Datenträger (1) verfügbare Feldstärke (3) zumindest während des ersten Einstellens (30) der internen Taktfrequenz bis zum zweiten Einstellen (30) der internen Taktfrequenz höher als die eine Mindestfeldstärke ist, welche von dem kontaktlosen Datenträger (1) zur Abarbeitung von Befehlen benötigt wird.

3. Verfahren nach einem der vorhergehenden Ansprüche, **dadurch gekennzeichnet, dass** der kontaktlose Datenträger (1) eine Prozessoreinheit und ein Betriebssystem umfasst und das Betriebssystem das Neustarten (60) des kontaktlosen Datenträgers (1) veranlasst.

4. Verfahren nach einem der vorhergehenden Ansprüche, **dadurch gekennzeichnet, dass** der Schritt des Neustartens (60) einen Reset bzw. ein Zurücksetzen des kontaktlosen Datenträgers (1) umfasst.

5. Verfahren nach einem der vorhergehenden Ansprüche, **dadurch gekennzeichnet, dass** mit dem Schritt des Neustartens (60) ein Taktgenerator des kontaktlosen Datenträgers (1) von einem Prozessor getrennt und/oder deaktiviert wird.

6. Verfahren nach einem der vorhergehenden Ansprüche, **dadurch gekennzeichnet, dass** der Schritt des Neustartens (60) des kontaktlosen Datenträgers (1) und/ oder des zweiten Einstellens (30) der internen Taktfrequenz wiederholt ausgeführt werden.

7. Verfahren nach Anspruch 6, **dadurch gekennzeichnet, dass** der kontaktlose Datenträger (1) einen Schritt zum Berechnen der Wiederholungen ausführt.

8. Verfahren nach einem der Ansprüche 6 oder 7, **dadurch gekennzeichnet, dass** der kontaktlose Datenträger (1) ermittelt, ob ein wiederholter Neustart ausgeführt wird.

9. Verfahren nach einem der Ansprüche 6 bis 8, **dadurch gekennzeichnet, dass** der kontaktlose Datenträger (1) die Wiederholungen des Neustartens (60) mithilfe eines Zählers zählt, wobei vorzugsweise der Zähler während des Neustartens (60) erhalten wird, insbesondere die Spannungsversorgung des Zählers aufrechterhalten wird.

10. Verfahren nach einem der vorhergehenden Ansprüche, **dadurch gekennzeichnet, dass** vor dem Schritt des ersten und/oder zweiten Einstellens (30) der internen Taktfrequenz der kontaktlose Datenträger (1) die Feldstärke des elektromagnetischen Feldes (3) bestimmt.

11. Verfahren nach einem der vorhergehenden Ansprüche, **dadurch gekennzeichnet, dass** die Abfrage ein Anforderungsbefehl, ein Aufwachbefehl, eine Antikollisionsabfrage oder ein Selektierungsbefehl ist.

12. Verfahren nach einem der vorhergehenden Ansprüche, **dadurch gekennzeichnet, dass** der kontaktlose Datenträger (1) eine Einbringgeschwindigkeit in das elektromagnetische Feld, eine Einbringrichtung in das elektromagnetische Feld und/oder eine Position im elektromagnetischen Feld bestimmt.

13. Kontaktloser Datenträger (1), **dadurch gekennzeichnet, dass** der kontaktlose Datenträger (1) zum Ausführen eines Verfahrens nach einem der Ansprüche 1 bis 12 ausgebildet ist.

14. Kontaktloser Datenträger (1) nach Anspruch 13, **dadurch gekennzeichnet, dass** der kontaktlose Datenträger (1) ein Betriebssystem aufweist, wobei das Betriebssystem auf einem Prozessor läuft und ausgebildet ist, das Verfahren nach einem der Ansprüche 1 bis 12 durchzuführen.

15. Computerprogrammprodukt, **dadurch gekennzeichnet, dass** das Computerprogrammprodukt zur Ausführung eines Verfahrens nach einem der Ansprüche 1 bis 12 ausgebildet ist.

**Claims**

1. A method for establishing a communication between a reading device and a contactless data carrier (1), comprising the following steps in the contactless data carrier (1):

   - first setting (30) of an internal clock frequency which depends on the field strength of an electromagnetic field (3);
   - receiving (140) a query from a reading device; and
   - creating (65) a response to the query; **characterized by** the steps of:
   - restarting (60) of the contactless data carrier (1);
   - second setting (30) of the internal clock frequency; wherein the steps of receiving (140) the query and of creating (65) the response to the query are effected after the second setting (30) of the internal clock frequency.

2. The method of claim 1, **characterized in that** the field strength (3) available to the contactless data carrier (1) at least during the first setting (30) of the internal clock frequency to the second setting (30) of the internal clock frequency is higher than the one minimum field strength required by the contactless data carrier (1) for processing commands.

3. The method according to any of the preceding claims, **characterized in that** the contactless data carrier (1) comprises a processor unit and an operating system and the operating system initiates the restarting (60) of the contactless data carrier (1).

4. The method according to any of the preceding claims, **characterized in that** the step of restarting (60) comprises a reset or a restoring of the contactless data carrier (1).

5. The method according to any of the preceding claims, **characterized in that** a clock generator of the contactless data carrier (1) is separated from a processor and/or deactivated with the step of restarting (60).

6. The method according to any of the preceding claims, **characterized in that** the step of restarting (60) of the contactless data carrier (1) and/or of the second setting (30) of the internal clock frequency are executed repeatedly.

7. The method according to claim 6, **characterized in that** the contactless data carrier (1) executes a step for computing the repetitions.

8. The method according to any of claims 6 or 7, **characterized in that** the contactless data carrier (1) ascertains whether a repeated restart is executed.

9. The method according to any of claims 6 to 8, **characterized in that** the contactless data carrier (1) counts the repetitions of the restarting (60) with the aid of a counter, wherein preferably the counter is maintained during the restarting (60), in particular the voltage supply of the counter is sustained.

10. The method according to any of the preceding claims, **characterized in that** prior to the step of the first and/or second setting (30) of the internal clock frequency the contactless data carrier (1) determines the field strength of the electromagnetic field (3).

11. The method according to any of the preceding claims, **characterized in that** the query is a request command, a wake-up command, an anti-collision query or a selection command.

12. The method according to any of the preceding claims, **characterized in that** the contactless data carrier (1) determines a feeding rate into the electromagnetic field, a direction of feeding into the electromagnetic field and/or a position in the electromagnetic field.

13. A contactless data carrier (1), **characterized in that** the contactless data carrier (1) is adapted to execute a method according to any of claims 1 to 12.

14. The contactless data carrier (1) according to claim 13, **characterized in that** the contactless data carrier (1) has an operating system, wherein the operating system runs on a processor and is adapted to execute the method according to any of claims 1 to 12.

15. A computer program product, **characterized in that** the computer program product is adapted to execute a method according to any of claims 1 to 12.

## Revendications

1. Procédé d'établissement d'une communication entre un appareil de lecture et un support de données (1) sans contact, comprenant les étapes suivantes dans le support de données (1) sans contact :

   - premier réglage (30) d'une fréquence interne d'horloge qui dépend de l'intensité de champ d'un champ électromagnétique (3) ;
   - réception (140) d'une interrogation de la part d'un appareil de lecture ; et
   - génération (65) d'une réponse à l'interrogation ;

   **caractérisé par** les étapes :

   - redémarrage (60) du support de données (1) sans contact ;
   - deuxième réglage (30) de la fréquence interne d'horloge, cependant que les étapes de la réception (140) de l'interrogation et de la génération (65) de la réponse à l'interrogation ont lieu après le deuxième réglage (30) de la fréquence interne d'horloge.

2. Procédé selon la revendication 1, **caractérisé en ce que** l'intensité de champ (3) dont dispose le support de données (1) sans contact est, au moins pendant le premier réglage (30) de la fréquence interne d'horloge jusqu'au deuxième réglage (30) de la fréquence interne d'horloge, plus élevée que l'une intensité de champ minimale requise par le support de données (1) sans contact pour l'accomplissement du traitement des instructions.

3. Procédé selon une des revendications précédentes, **caractérisé en ce que** le support de données (1) sans contact comprend une unité de processeur et un système d'exploitation, et que le système d'exploitation déclenche le redémarrage (60) du support de données (1) sans contact.

4. Procédé selon une des revendications précédentes, **caractérisé en ce que** l'étape du redémarrage (60) comprend un reset ou une réinitialisation du support de données (1) sans contact.

5. Procédé selon une des revendications précédentes, **caractérisé en ce que**, avec l'étape du redémarrage (60), un générateur d'horloge du support de données (1) sans contact et déconnecté d'un processeur ou désactivé.

6. Procédé selon une des revendications précédentes, **caractérisé en ce que** l'étape du redémarrage (60) du support de données (1) sans contact et/ou du deuxième réglage (30) de la fréquence interne d'horloge sont effectuées de manière répétée.

7. Procédé selon la revendication 6, **caractérisé en ce que** le support de données (1) sans contact exécute une étape destinée au calcul des répétitions.

8. Procédé selon une des revendications 6 ou 7, **caractérisé en ce que** le support de données (1) sans contact détermine si un redémarrage répété est exécuté.

9. Procédé selon une des revendications de 6 à 8, **caractérisé en ce que** le support de données (1) sans contact compte les répétitions du redémarrage (60) à l'aide d'un compteur, cependant que, de préférence, le compteur est gardé durant le redémarrage (60), qu'en particulier l'alimentation en courant du compteur est maintenue.

10. Procédé selon une des revendications précédentes, **caractérisé en ce que**, avant l'étape du premier et/ou du deuxième réglage (30) de la fréquence interne d'horloge, le support de données (1) sans contact détermine l'intensité de champ du champ électromagnétique (3).

11. Procédé selon une des revendications précédentes, **caractérisé en ce que** l'interrogation est une instruction de sollicitation, une instruction d'éveil, une interrogation d'anti-collision ou une instruction de sélection.

12. Procédé selon une des revendications précédentes, **caractérisé en ce que** le support de données (1) sans contact détermine une vitesse d'introduction dans le champ électromagnétique, une direction d'introduction dans le champ électromagnétique, et/ou une position dans le champ électromagnétique.

13. Support de données (1) sans contact, **caractérisé en ce que** le support de données (1) sans contact est conçu pour exécuter un procédé selon une des revendications de 1 à 12.

14. Support de données (1) sans contact selon la revendication 13, **caractérisé en ce que** le support de données (1) sans contact comporte un système d'exploitation, cependant que le système d'exploitation marche sur un processeur et est conçu pour exécuter le procédé selon une des revendications de 1 à 12.

15. Produit programme d'ordinateur, **caractérisé en ce que** le produit programme d'ordinateur est conçu pour exécuter un procédé selon une des revendications de 1 à 12.

Fig. 1

Fig. 2

**EP 2 993 625 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013002888 A1
- DE 10334398 A1
- WO 2005062243 A1